Europäisches Patentamt

**European Patent Office**

Office européen des brevets

(11) Publication number: **0 019 943**
A1

## (12) EUROPEAN PATENT APPLICATION

(21) Application number: **80200197.4**

(22) Date of filing: **03.03.80**

(51) Int. Cl.³: **A 46 D 3/08**

(30) Priority: **31.05.79 DE 2922288**

(71) Applicant: **G.B. BOUCHERIE, N.V., Stuivenbergstraat 116-137/9, B-8700 Izegem (BE)**

(43) Date of publication of application: **10.12.80 Bulletin 80/25**

(72) Inventor: **Boucherie, Leonel, Polydore, Potaardestraat 3, B-8810 Roeselare-Rumbeke (BE)**

(74) Representative: **Donné, Eddy, M.F.J.Bockstael Arenbergstraat 13, B-2000 Anvers (BE)**

(84) Designated Contracting States: **BE CH FR GB IT NL SE**

(54) Device for successively taking off brush bodies from a feeding appliance.

(57) Device for successively taking off brush bodies from a feeder, characterized in that it mainly consists of a combination of a feeding box (1) for brush bodies (2); in the bottom of this box (1) an aperture or slot (3) and, through the latter, a slide which is arranged at its upper end so as to be apt to carry a brush body and has an appropriate reciprocating motion.

EP 0 019 943 A1

1

Device for successively taking off brush bodies from a fee-
ding appliance

The present invention relates to a device for successively taking off from a feeding appliance, more especially from a feeding box, brush bodies, this device being very simple, efficient and reliable, and allowing to handle brush bodies irrespective of the position of the brushes in the feeding box, whilst it is possible to use this device for any possible brush-body shape.

In a particular application, the device according to the invention will be used for handling for instance tooth-brushes, amongst others in order to convey same near to appliances for further treatment of the brush bodies, as for instance appliances which grip the brush bodies in order to: either fix and possibly change their position, either to carry them to or alongside of a detecting device, and afterwards change their position or let it be changed by an other device, etc.

For this purpose, the device according to the invention mainly consists of a device for successively taking off brush bodies from a feeder, characterized in that it mainly consists in the combination of a supply box for brush bodies; in the bottom of this box an aperture or slot, and through the latter a slide with a reciprocating motion, the upper face of which is apt to carry a brush body.

2

In order to throw more light on the characteristics of the present invention, a few preferred embodiments are described as examples without any limiting character, reference being made to the attached drawings, in which :

Figure 1 shows a schematical section of a device according to the invention;

Figure 2 is a view is similar to the one of Figure 1, but for a second position of the device;

Figure 3 shows a section according to line III-III of Figure 2;

Figures 4, 5, 6 and 7 show the four possible positions of a profiled brush body, for producing a tooth-brush;

Figures 8, 9, 10 and 11 are views which are similar to the one of Figure 2, but respectively for a device for dealing with a profiled brush body according to Figure 4, these Figures 8 through 11 showing the four possible positions wherein a suchlike brush body is being removed from the feeding box by the device according to the invention;

Figure 12 is a view which is similar to the one of Figure 8, but for another execution variant still.

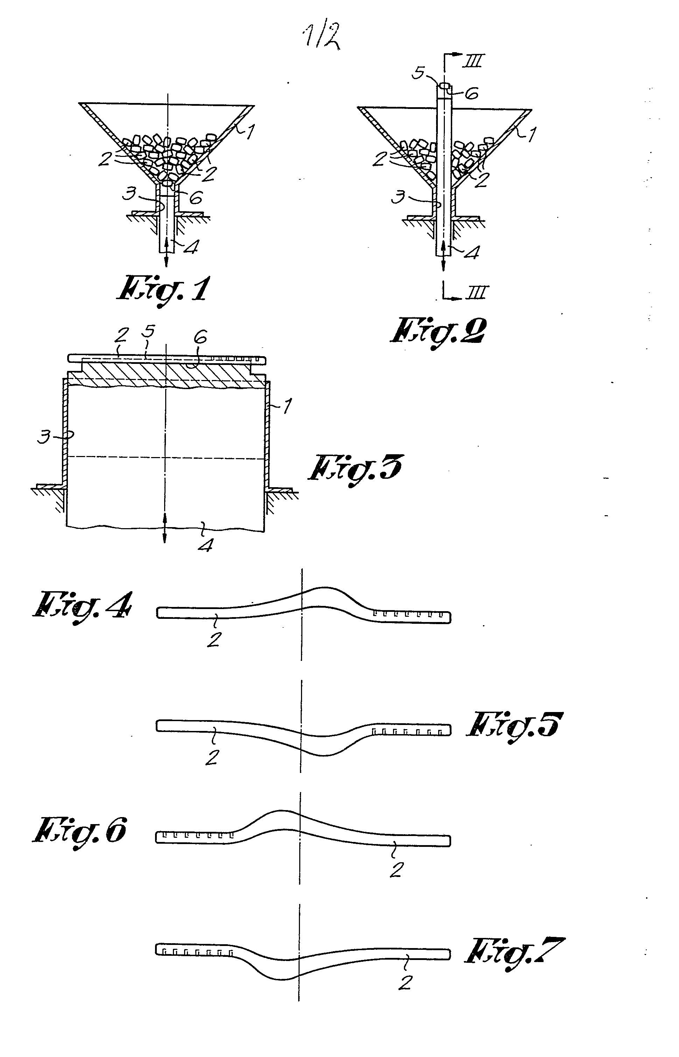

In the Figures 1 through 3 is shown the simplest execution of the device according to the invention, which is for successively taking off flat or nearly flat brush bodies from a feeding device.

This device mainly consists of a feeding box 1, wherein have been put brush bodies 2, the bottom of this feeding box ending in a slot 3, wherein a slide 4 can be alternatively moved up and down by means of an appropriate driving mechanism which is not shown. In order to ensure that the brush body 2 will be appropriately resting on the slide 4, the upper face of the aforesaid slide will appropriately be provided, in cross section, with a recess 5.

The operation of this device is very simple and as follows.

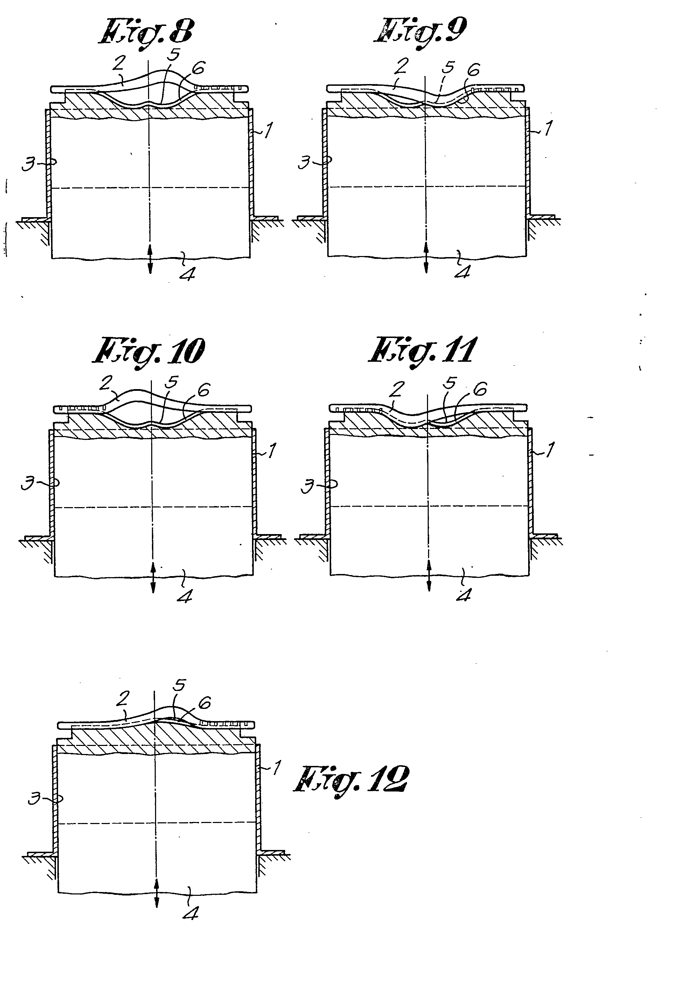

The slide 4, having an alternative up and down motion, caused by a driving mechanism which is not shown and may be a cam, a crank mechanism, a pressure cylinder, or a similar device, will in its successive upward motions lift a brush body 2 from the feeding box 1, as schematically shown in the Figures 2 and 3, in order, for instance, to convey it near to a device, not shown, apt to grip a brush body removed in this way from the feeding box 1 and to move it further according to a predetermined cycle of operations.

Although in the aforesaid example the feeding box is provided for in the shape of a funnel, which, it goes without saying, is the most ideal shape to make it possible to remove from such a feeding box also the last brush body, it also goes without saying that such a feeding box may have any other shape, being for instance a feeder with a flat bottom, which may or may not be inclined, it being understood that if the feeding box has an inclined flat bottom, the aforesaid slide 4 shall preferably be provided for in the lowest part of such a box.

In the Figures 4 through 7 are shown four possible positions of a profiled tooth-brush 2. In connection herewith, views are shown in Figures 8 through 11, which are corresponding to Figure 3, but in this case there is shown that the upper face 5, respectively the recess 6, show a profile which is such that the brush body 2, in the four positions as shown in the Figures 4 through 7, can be carried by the slide 4.

To end with, Figure 12 shows a further execution in which the upper face 5, respectively the recess 6, of the slide 4, is also profiled for receiving a brush body according to the Figures 4 through 7, but in such a case the profile is executed in such a way that the brush body can be removed from the feeding box only in two positions, that is to say in the

4

positions according to the Figures 4 and 6.

Should, indeed, the brush body become placed on the slide 4 in the positions as shown in the Figures 5 and 7, it would fall off and get back into the feeding box, due to the shape of the profile, during the upward motion of the slide 4.

It is clear that a very simple device has been achieved in this way for successively removing from a feeding box profiled or not profiled brush bodies, whilst the shape of the feeding box as well as the shape of the slide 4 and the profile of the upper face of the aforesaid slide 4 may be achieved in any possible way and, as far as the aforesaid profile of the upper face of the slide 4 is concerned, it goes without saying that it will always be depending on the shape of the brush body.

Although in the present embodiment only one slide is provided for in the aforesaid feeding box in order successively to take off one brush body, it goes without saying that the invention also covers a device wherein one slide is used which simultaneously removes two or more brush bodies from the feeding box or one wherein two or more slides are provided for, each of which is apt to deal with one or more brush bodies.

Consequently, the present invention is not limited to the embodiments described as examples and illustrated in the attached drawings, but such a device according to the invention may be achieved in all possible shapes and dimensions without going outside the scope of the invention.

0019943

1

Claims.

1.- Device for successively taking off brush bodies, from a feeder, characterized in that it mainly consists of a combination of a feeding box (1) for brush bodies (2); in the bottom of this box (1) an aperture or slot (3) and, through the latter, a slide which is arranged at its upper end so as to be apt to carry a brush body and has an appropriate reciprocating motion.

2.- Device according to claim 1, characterized by the fact that the aforesaid slide (4) has a width that is slightly greater that the width of the brush body (2) and a length that is equal to or approximately equal to the length of the brush body (2), the upper face (5) of the slide (4) being provided for with a longitudinal recess.

3.- Device according to claim 2, characterized by the fact that the aforesaid upper face (5), respectively recess (6), are profiled as required to suit the shape of the brush body (2).

4.- Device according to claim 3, characterized by the fact that the aforesaid profile is such that the brush body (2) can occupy only one position on the aforesaid slide (4).

5.- Device according to claim 3, characterized by the fact that the aforesaid profile is such that the brush body (2) can occupy two different positions on the aforesaid slide (4).

6.- Device according to claim 3, characterized by the fact that the aforesaid profile is such that the brush body (2) can occupy four positions on the aforesaid slide (4).

7.- Device according to one of the preceding claims, characterized by the fact that the feeding box (1) is funnel-shaped at least in its lower part.

8.- Device according to one of the claims 1 through 6, characterized by the fact that the feeding box (1) has a flat bottom.

9.- Device according to claim 8, characterized by the fact that the flat bottom is executed in a sloping way.

10.- Device according to one of the preceding claims, characterized by the fact that in one feeding box (1) two or more slides (4) are provided for, which work in synchronism or alternatively.

11.- Device according to one of the preceding claims, characterized by the fact that the slide or slides (4) have one or more recesses (6) for a brush body (2).

0019943

1/2

*Fig. 1*

*Fig. 2*

*Fig. 3*

*Fig. 4*

*Fig. 5*

*Fig. 6*

*Fig. 7*

001 9943

**Fig. 8**

**Fig. 9**

**Fig. 10**

**Fig. 11**

**Fig. 12**

0019943

European Patent Office

**EUROPEAN SEARCH REPORT**

Application number

EP 80 20 0197

| Category | Citation of document with indication, where appropriate, of relevant passages | Relevant to claim |
|---|---|---|
| | FR - A - 2 335 176 (ZAHORANSKY) <br> * The whole document * <br><br> -- <br><br> MACHINE MODERNE, Novembre 1968, Paris FR <br> T. HANSON: "Outillage et production sur machines horizontales à coulisseaux multiples", <br> * Pages 33,41,42,43 * <br><br> -- | 1 <br><br><br><br><br> 1-3,9, 10 |
| A | FR - A - 2 092 750 (M. MASI) <br> * Figure 4 * <br><br> -- | 10 |
| A | DE - C - 746 239 (KERB- KONUS GE-SELLSCHAFT DR. CARL EIBES & CO.) <br> * Figure 1 * <br><br> -- | 1 |
| A | FR - A - 2 267 266 (GLOTTER-METALL) <br> * Figures 1,2 * <br><br> -- | 1 |
| A | FR - A - 5 055 512 (ETABLISSEMENTS SKODA PLZEN) <br> * Figures 1-7 * <br><br> ---- | 1 |

**DOCUMENTS CONSIDERED TO BE RELEVANT**

**CLASSIFICATION OF THE APPLICATION (Int. Cl. 3)**

A 46 D 3/08

**TECHNICAL FIELDS SEARCHED (Int.Cl. 3)**

A 46 D
B 65 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-08-1980 | AUER |

EPO Form 1503.1 06.78